# EUROPÄISCHE PATENTSCHRIFT

(11) **EP 1 250 209 B1**
(45) Veröffentlichungstag und Bekanntmachung des Hinweises auf die Patenterteilung: **14.12.2005**
(21) Anmeldenummer: 01900397.9
(22) Anmeldetag: 09.01.2001
(51) Int. Cl.: B23K 9/20

(54) **VERFAHREN UND VORRICHTUNG ZUM MEHRSTUFIGEN LICHTBOGENSCHWEISSEN**
METHOD AND DEVICE FOR MULTIPLE STAGE ARC-WELDING
PROCEDE ET DISPOSITIF DE SOUDAGE A L'ARC EN PLUSIEURS ETAPES

(30) Priorität: 14.01.2000 DE 10001344
(43) Veröffentlichungstag der Anmeldung: 23.10.2002
(73) Patentinhaber: Newfrey LLC, Newark, Delaware 19711 (US)
(72) Erfinder: SCHMITT, Klaus, Gisbert, 35390 Giessen (DE); KRENGEL, Michael, 35396 Giessen (DE)
(74) Vertreter: Haar, Lucas Heinz Jörn
(86) Internationale Anmeldenummer: PCT/EP2001/000145
(87) Internationale Veröffentlichungsnummer: WO 2001/051241

(56) Entgegenhaltungen:
- DE-A- 4 437 264
- US-A- 5 662 820
- US-A- 5 938 945

## Beschreibung

Die Erfindung betrifft ein Verfahren zum mehrstufigen Lichtbogenschweißen, mit dem ein Bolzen, der an seinem Anschweißende einen Flansch aufweist, an eine metallische Struktur herangeführt und angeschweißt wird.

Das Anschweißen eines metallischen Bolzens an eine metallische Struktur mittels Lichtbogenschweißen ist ein weit verbreitetes Verfahren, welches insbesondere in der Automobilindustrie Anwendung findet. Man unterscheidet im wesentlichen zwei verschiedene Schweißverfahren mit entsprechender Ausgestaltung der zugehörigen Bolzen.

Bei einem Schweißverfahren, dem sogenannten Hubzündungsverfahren, weist das Anschweißende des Schweißbolzens einen Flansch auf, der meist an seiner Unterseite auch noch eine Materialwulst aufweist, die gewölbt sein kann oder die Form eines sehr stumpfen Kegels aufweist. Der Bolzen wird beim Hubzündungsverfahren zunächst mit der Materialwulst an eine Struktur herangeführt, bis ein elektrischer Kontakt entsteht. Aus einer Schweißstromquelle wird nun ein hoher elektrischer Kurzschlußstrom durch Bolzen und Struktur geleitet. Anschließend wird der Bolzen wieder etwas von der Struktur abgehoben, wodurch zwischen Bolzen und Struktur ein Lichtbogen entsteht, der die Struktur in einem Aufschmelzbereich aufschmilzt und ebenfalls Teile der Materialwulst. Nach einer vorgegebenen Zeit wird der Bolzen in die im Aufschmelzbereich entstandene Schmelze abgesenkt, wodurch beim anschließenden Abkühlen eine sehr stabile Schweißverbindung zwischen Bolzen und Struktur entsteht.

Ein anderes Verfahren zum Lichtbogenschweißen von Bolzen an eine metallische Struktur ist das sogenannte Spitzenzündungsverfahren. Dabei weist das Anschweißende des Schweißbolzens eine herausragende oder hervorstehende Spitze auf, die zunächst an die Struktur herangeführt wird. Die Spitze ist so dimensioniert, daß sie durch Beaufschlagung mit einem Schweißstrom schlagartig verdampft unter Bildung eines heißen Plasmas, wodurch das verbleibende Anschweißende und die Struktur aufgeschmolzen werden. Der Bolzen wird dabei direkt mit großer Geschwindigkeit in die Schmelze abgesenkt. Ein solches Verfahren ist beispielsweise in der DE 42 36 527 beschrieben. Die hohe benötigte Energie für diesen Vorgang führt zu einem sehr lauten Explosionsgeräusch. Außerdem muß die Struktur im allgemeinen auf der Rückseite des Aufschmelzbereiches unterstützt werden, da das Auftreffen des Schweißbolzens mit hoher Geschwindigkeit sonst Schwingungen auslösen kann, die die Schweißqualität beeinträchtigen. Ohnehin ist die Qualität der Schweißung stark von der Qualität der Spitze abhängig.

Die immer breitere Anwendung von Bolzenschweißverfahren fuhrt auch zu Anwendungsfällen, die mit keinem der beiden Verfahren besonders gut gelöst werden können. So gibt es Anwendungsfälle, in denen die Struktur im Aufschmelzbereich beschichtet oder verschmutzt, insbesondere mit einer Wachs- oder Ölschicht versehen ist, und Fälle, bei denen als Struktur ein Material, insbesondere Aluminium, vorhanden ist, welches eine Oxidschicht aufweist. Auch für den Schweißvorgang störende Beschichtungen, wie beispielsweise eine Feuerverzinkung kommen vor. Kombinationen dieser Fälle treten ebenfalls auf.

In der Druckschrift US 5,662,820, die den nächstliegenden Stand der Technik darstellt, ist ein Schweißverfahren für das Hubzündungsbolzenschweißen beschrieben, bei dem abhängig von der nach Zündung des Hauptstromlichtbogens gemessenen Spannung des Lichtbogens dem Hauptstromlichtbogen ein oder mehrere Reinigungsimpulse überlagert werden.

Die Druckschrift US 5,938,945 zeigt und beschreibt ein Verfahren und eine Vorrichtung zum Verschweißen von Schweißbolzen mit einem Werkstück nach dem Hubzündungsverfahren. Bei den Verfahren wird zur Vermeidung von Kurzschlüssen die Polarität des Bolzens bzw. des Werkstücks wenigstens einmal während des Schweißens gewechselt und hierfür der Schweißstrom für eine vorgegebene Zeitspanne auf einen Minimalwert reduziert oder unterbrochen. Das Verfahren beinhaltet keine separaten Reinigungsschritte.

Es ist bekannt, beim Bolzenschweißen zwei Stufen vorzusehen, wobei die erste Stufe zur Feststellung des Oberflächenzustandes dient und/oder eine Reinigungsstufe ist und die zweite Stufe die Schweißverbindung herstellt. In einer einzigen Reinigungsstufe läßt sich aber nicht immer eine reproduzierbar große gereinigte Fläche herstellen, da bei unterschiedlicher Oberflächenbeschaffenheit gerade die erste Zündung eines Lichtbogens zu schwer reproduzierbaren Ergebnissen führt.

Für solche Anwendungsfälle ist es Aufgabe der vorliegenden Erfindung ein gattungsgemäßes Verfahren zum Lichtbogenschweißen eines Bolzens an eine metallische Struktur bereitzustellen, welches qualitativ hochwertig und reproduzierbare Schweißverbindungen an Oberflächen ermöglicht, die mit einer Oxidschicht und/oder einem anderen Oberflächenbelag, insbesondere Öl, Wachs oder auch einer Zinkschicht versehen sind, wobei das Verfahren aber auch unter erträglichen Betriebsbedingungen und wirtschaftlich arbeiten soll.

Zur Lösung dieser Aufgabe dient ein Verfahren gemäß dem Anspruch 1. Vorteilhafte Ausgestaltungen sind in den jeweils abhängigen Ansprüchen angegeben.

Die Lösung besteht verfahrensmäßig darin, daß zunächst mittels eines zwischen dem Bolzen und der Struktur erzeugten Lichtbogens die Oberfläche der Struktur im Aufschmelzbereich in mindestens zwei Reinigungsschritten gereinigt und erst danach die metallische Verbindung zwischen dem Bolzen und der Struktur durch ein übliches Lichtbogen-Bolzenschweißen vorgenommen wird.

Wenn der Abstand des Bolzens von der Struktur und die Einschaltdauer des Lichtbogens richtig abgestimmt werden, kann nämlich der Lichtbogen zu einer Reinigung der Struktur-Oberfläche von Öl- oder Wachsschichten, aber auch von Oxiden oder einer Feuerverzinkung benutzt werden. Zumindest im Aufschmelzbereich des Bolzens läßt sich auf diese Weise eine gründliche Reinigung der Struktur-Oberfläche erzielen, so daß die anschließende metallische Verbindung durch das Lichtbogen-Bolzenschweißen ohne besonderen Aufwand und dennoch zuverlässig erzielt werden kann. Dabei stellt der erste Reinigungsschritt durch Zünden eines intensiven, aber eng begrenzten Lichtbogens eine präzise Kontaktfläche her, die beim erneuten Aufsetzen des Bolzens und bei dessen Abheben einen gut reproduzierbaren zweiten Reinigungslichtbogen ermöglicht, der dann den ganzen späteren Aufschmelzbereich reinigt.

Erfindungsgemäß wird die Reinigung der Struktur-Oberfläche daher in zwei getrennten, nacheinander ablaufenden Reinigungsstufen durchgeführt und dabei erfolgt die Steuerung des gesamten mehrstufigen Lichtbogen-Schweißverfahrens durch Bewegen des Bolzens in Richtung auf die Struktur und davon weg sowie durch Zeitpunkt und Dauer der elektrischen Verbindung des Bolzens mit der Schweißstromquelle. Bei dieser zweistufigen Reinigung mittels Lichtbogens kann auf unterschiedliche Aspekte des Reinigungsvorganges abgestellt werden.

Wird nämlich das Verfahren in der ersten Reinigungsstufe nach der Vorschrift des Anspruchs 1 geführt, so ergibt sich eine besonders intensive Reinigung einer kleineren Fläche, die etwa einem Teil der Flansch-Querschnittsfläche des Bolzens entspricht. In dieser Verfahrensstufe werden besonders die Ölschichten und Oxide genügend weit entfernt.

Vorteilhafte Betriebsparameter für diese erste Reinigungsstufe sind in den Ansprüchen 2 bis 4 angegeben.

Nach der Beendigung der ersten Reinigungsstufe bleibt der Bolzen von der Struktur abgehoben, und der Lichtbogen bleibt ausgeschaltet. Die beiden Reinigungsstufen sind also vollständig voneinander getrennt, und es wird auch eine übermäßige Erwärmung von Bolzen und Struktur vermieden, so daß der Bolzen beim erneuten Aufsetzen nicht auf eine geschmolzene Oberfläche trifft. Die Führung des Verfahrens in der zweiten Reinigungsstufe gemäß dem Anspruch 5 führt durch die größere Entfernung des Bolzens von der Struktur-Oberfläche zu einem Lichtbogen, der einen größeren Teilbereich der Struktur-Oberfläche reinigt; dieser Bereich entspricht etwa der Größe der Flansch-Querschnittsfläche des Bolzens. Diese Reinigungsstufe ist besonders dazu geeignet, auch Wachsschichten von der Struktur-Oberfläche zu entfernen, wobei diese Wachsschichten in einer Stärke von 1 bis 10 g/m² vorhanden sein können. Auf diese Weise sind alle Voraussetzungen für die anschließende metallische Verbindung durch Lichtbogen-Bolzenschweißen gegeben. In der zweiten Reinigungsstufe wird ein solcher Abstand des Bolzens von der Struktur gewählt, daß ein genügend großer Bereich der Struktur gereinigt werden kann. Der günstigste Abstand hängt daher etwa von der Größe des späteren Aufschmelzbereiches, d.h. vom Durchmesser des Anschweißflansches ab.

Da nunmehr ohnehin das Aufschmelzen der Struktur-Oberfläche erfolgen muß, geht die zweite Reinigungsstufe übergangslos in den Vorgang des Lichtbogen-Bolzenschweißens über; der Lichtbogen bleibt in diesen beiden Verfahrensstufen also ununterbrochen bestehen.

Allein durch die richtige Führung des in jedem Fall notwendigen Lichtbogens ist es somit nach dem erfindungsgemäßen Verfahren möglich, zunächst eine gründliche Reinigung der entscheidenden Bereiche der Struktur-Oberfläche durchzuführen und sodann eine besonders hochwertige metallische Verbindung zu erzielen.

Die Ansprüche 7 bis 9 zeigen die Werkstoffe auf, mit denen sich das erfindungsgemäße Verfahren besonders gut umsetzen läßt.

Eine Durchführung einer oder mehrerer weiterer Reinigungsstufen ist möglich und kann für bestimmte Anwendungsfälle von Vorteil sein.

Gemäß einer besonders vorteilhaften Weiterbildung der Erfindung wird vor der Reinigung zunächst eine Kenngröße gemessen, die proportional zum Verschmutzungsgrad der zu verschweißenden Oberflächen ist, mit deren Hilfe die Anzahl der Reinigungsstufen bestimmt wird. Hiermit wird der Grad der erforderlichen Reinigung bestimmt und ein unzureichendendes bzw. übermäßiges Reinigen der Oberfläche vermieden. Als Kenngröße bietet sich der elektrische Oberflächenwiderstand an, der in erster Näherung proportional zur Verschmutzung der Oberflächen ist. Mit Hilfe einer Strom- und /oder Spannungsmessung zwischen den zu verschweißenden Oberflächen wird der Oberflächenwiderstand und damit die erforderliche Anzahl der Reinigungstufen ermittelt. In einer speziellen Weiterbildung wird die Kontaktspannung zwischen dem Bolzen und der Struktur gemessen.

In einer vorteilhaften Weiterbildung des erfindungsgemäßen Verfahrens wird mit Hilfe von mindestens einem, vorzugsweise zwei oder mehr, Schwellwerten für die Kenngröße, Kriterien für die Anzahl der zusätzlichen Reinigungsstufen vorgegeben, die je nach Art der zu erzielenden Verschweißung, der Beschaffenheit der Oberfläche, der verwendeten, zu verschweißenden Materialien bzw. der anderen schweißspezifischen Parameter unterschiedlich sein können.

Eine Vorrichtung zur Durchführung des Verfahrens muß geeignet sein, auch kurzzeitig und exakt stärkere Stromstöße zur Verfügung zu stellen; kurze Zeit danach muß der notwendige Schweißstrom für den Lichtbogen zur Verfügung stehen. Dazu ist eine Schweißstromquelle mit entsprechender Steuereinrichtung erforderlich, die z. B. eine oder zwei Kondensatorbatterien enthalten kann. Außerdem muß die Vorrichtung alle typischen Einrichtungen zur Durchführung eines Hubzündungsverfahrens aufweisen, nämlich eine Bolzenhalterung, einen Linearantrieb zum Bewegen der Bolzenhalterung und eine schnelle Steuerung, die den Bewegungsablauf des Bolzens und den Schweißstromverlauf mit großer Genauigkeit steuern kann, insbesondere mit zeitlichen Genauigkeiten im Bereich von 2 bis 20 ms.

Als besonders geeignet für die vorliegende Aufgabe hat sich ein Linearantrieb, insbesondere mit einem elektromagnetischen Antrieb erwiesen. Solche Antriebe, wie sie beispielsweise in der DE 44 37 264 A1 beschrieben sind, lassen eine sehr präzise Steuerung oder Regelung der Position und der Geschwindigkeit des Bolzens während des Schweißvorganges zu.

Die Erfindung wird anschließend in einem Ausführungsbeispiel noch näher erläutert, und zwar zeigen
Fig.1 einen schematischen Querschnitt einer Anordnung zum Bolzenschweißen und
Fig.2 ein Diagramm über den zeitabhängigen Verlauf des Bolzenabstandes s von einer Struktur sowie den entsprechenden Verlauf der Stromstärke I.

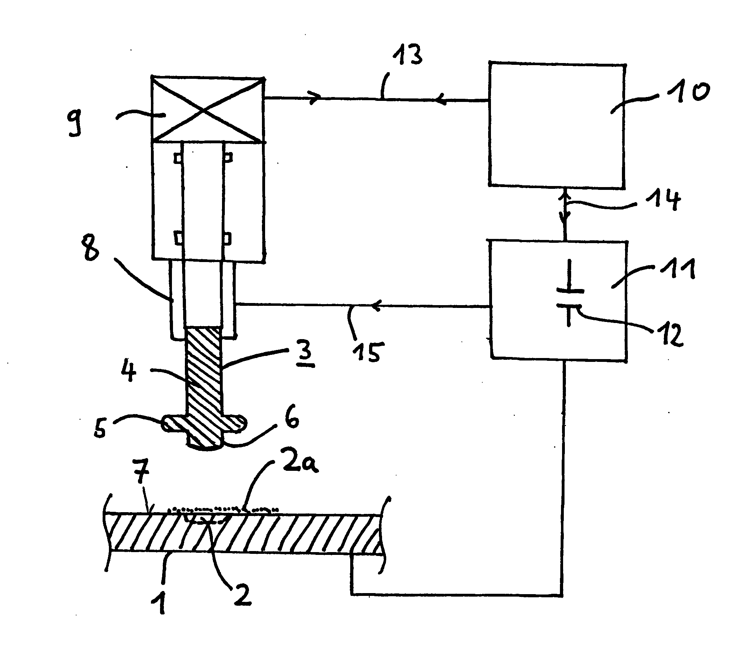

Fig. 1 zeigt im Querschnitt die Anordnung eines Bolzens über der Struktur, an die er anzuschweißen ist sowie die wichtigsten Teile der dazugehörigen Schweißvorrichtung.

Die Ziffer 1 bezeichnet eine Struktur, beispielsweise einen Teil einer Fahrzeugkarosserie. Diese Struktur kann aus Aluminium oder einer Aluminium-Legierung bestehen und einen Aufschmelzbereich 2 haben, der von einem Oberflächenbelag 2a bedeckt sein kann. Hierbei kann es sich um ein Oxid, um eine Zinkschicht, um eine Ölschicht oder auch um eine Wachsschicht handeln. Ein Schweißbolzen 3 mit einem Bolzenschaft 4 und einem Flansch 5, der an seinem unteren Ende eine Materialwulst 6 aufweist, ist über der Struktur 1 an einem Bolzenhalter 8 angeordnet. Der Bolzenhalter 8 läßt sich mittels eines Linearantriebes 9, präzise geregelt oder gesteuert, axial bewegen. Hierzu dient eine Steuerung 10, die über eine Steuerleitung 13 mit dem Linearantrieb 9 verbunden ist. Außerdem ist die Steuerung 10 auch mit einer Schweißstromquelle 11 über eine Steuerleitung 14 verbunden, wobei die Schweißstromquelle 11 den Bolzenhalter 8 über eine Stromleitung 15 mit dem erforderlichen Schweißstrom versorgt. Die Schweißstromquelle 11 enthält z. B. eine Kondensatorbatterie 12.

Zur Durchführung des erfindungsgemäßen Verfahrens wird der Bolzen 3 in dem Bolzenhalter 8 so weit abgesenkt, daß er die Struktur-Oberfläche 7 im Aufschmelzbereich 2 elektrisch kontaktiert. Durch eine erste Entladung läßt sich ein Lichtbogen zünden, der eine Reinigung der Struktur-Oberfläche auf einer kleinen Fläche bewirkt, die etwa einem Teil der Flansch-Querschnittsfläche des Bolzens entspricht. Die Verbindung zu der Schweißstromquelle 11 wird allerdings schon nach 40 ms unterbrochen, und der Bolzen 3 bleibt in seiner von der Struktur-Oberfläche 7 beabstandeten Stellung bis nach dem vollständigen Erlöschen des Lichtbogens stehen. Seine Stillstandsphase kann etwa 30 ms und länger dauern. Auf diese Weise wird ein Überhitzen von Bolzen und Struktur-Oberfläche vermieden, und es wird verhindert, daß der Bolzen beim nächsten Aufsetzen schon angeschweißt wird. Der Abstand des Bolzens 3 von der Struktur-Oberfläche 7 während dieser ersten Reinigungsstufe beträgt etwa 1,0 bis 3,0 mm.

Anschließend wird die zweite Reinigungsstufe eingeleitet, indem der Bolzen aus seiner beabstandeten Ruhestellung wieder an die Struktur-Oberfläche 7 herangeführt wird, bis er sie in ihrem Aufschmelzbereich 2 berührt. Es wird nun erneut ein Lichtbogen gezündet, aber der Bolzen in einem größeren Abstand als vorher von der Struktur-Oberfläche entfernt und dort gehalten. Auf diese Weise erfolgt eine Reinigung der Struktur-Oberfläche in einem größeren Flächenbereich als bei der ersten Reinigungsstufe. Die gereinigte Fläche kann diesmal die Flansch-Querschnittsfläche des Bolzens 3 übersteigen.

Durch diese zweistufige Reinigung können die mit 2a bezeichneten Verunreinigungen im Aufschmelzbereich entfernt werden. Hierbei dient die erste, auf einen kleineren Flächenbereich intensiv einwirkende Reinigungsstufe vor allem dazu, Oxid- und Ölschichten zu entfernen, während mit der zweiten Reinigungsstufe auch Wachsschichten in einer Stärke von 1 bis 10 g/m² beseitigt werden. Die Stromstärke kann in beiden Reinigungsstufen etwa 100 mA betragen.

Nach dem Abschluß der zweiten Reinigungsstufe wird der Lichtbogen nicht unterbrochen. Vielmehr wird der Bolzen wieder näher an die Struktur-Oberfläche 7 herangefahren, bis er den zum Einleiten des Schweißvorganges geeigneten Abstand hat. Die zweite Reinigungsstufe geht somit übergangslos in den Vorgang der metallischen Verbindung durch Lichtbogen-Schweißen über. Zuletzt wird der Bolzen 3 in Kontakt mit dem nun metallisch reinen Aufschmelzbereich 2 gebracht. Am Ende des Schweißvorganges steht eine feste Schweißverbindung zwischen Bolzen 1 und Schweißbolzen 3. Die genaue zeitliche Aufeinanderfolge der beiden Reinigungsvorgänge, der Abkühlzeiten und des Schweißverfahrens erfordert eine präzise Steuerung der Bewegungen des Bolzenhalters 8 und der Schweißstromquelle 11. Für eine präzise Regelung eignet sich besonders ein Antrieb mit einem Linearmotor, wie sie auch bei herkömmlichen Hubzündungsverfahren eingesetzt werden.

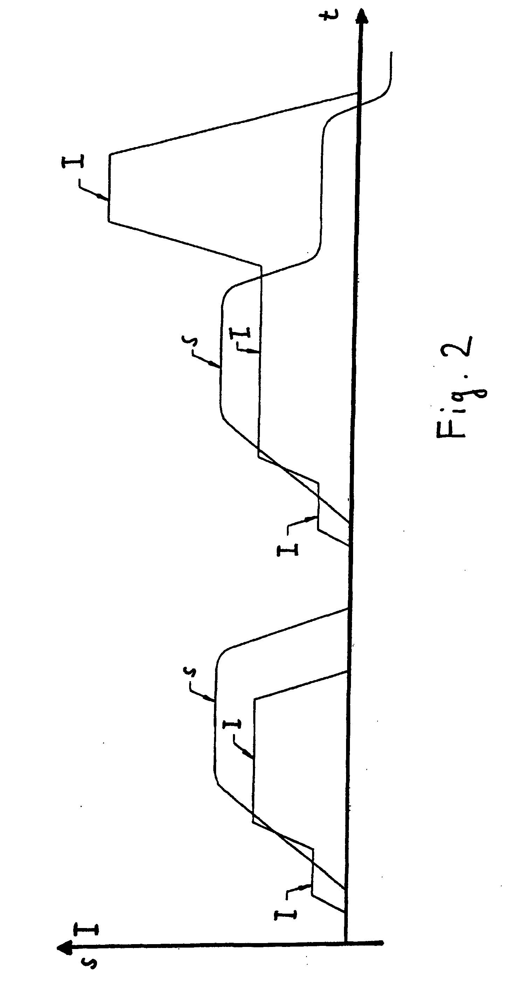

Die beschriebenen Vorgänge spiegelt auch die Fig. 2 wieder, in der die zeitlichen Verläufe von Stromstärke I und Abstand s des Schweißbolzens 3 von der Struktur 1dargestellt sind. Man erkennt, daß der Strom I eingeschaltet wird, noch während der Schweißbolzen 3 auf der Struktur 1 ruht. Beim Abheben des Schweißbolzens 3 zündet ein Lichtbogen, wodurch der Strom I zur ersten Reinigungsstufe ansteigt. Nach dem Abschalten des Stromes I bleibt der Schweißbolzen noch so lange angehoben, bis die Oberfläche der Struktur 1 abgekühlt ist. Es folgt erneutes Aufsetzen des Schweißbolzens 3, Einschalten des Stromes I, Abheben des Schweißbolzens 3 zur zweiten Reinigungsstufe, Absenken des Schweißbolzens 3 zur Erhöhung des Schweißstromes und schließlich Absenken des Schweißbolzens 3 in die Schmelze bei gleichzeitigem Abschalten des Stromes.

Die vorliegende Erfindung eignet sich besonders für automatisierte Schweißverfahren, bei denen eine Vielzahl von Schweißbolzen mit Schweißverbindungen von hoher Qualität und Reproduzierbarkeit an Strukturen, insbesondere aus Aluminium oder Aluminium-Legierungen angebracht werden soll.

### Bezugszeichenliste

- 1: Struktur
- 2: Aufschmelzbereich
- 2a: Oberflächenbelag (Oxid, Öl, Wachs)
- 3: Schweißbolzen
- 4: Bolzenschaft
- 5: Flansch
- 6: Materialwulst
- 7: Struktur-Oberfläche
- 8: Bolzenhalter
- 9: Linearantrieb
- 10: Steuerung
- 11: Schweißstromquelle
- 12: Kondensatorbatterie
- 13: Steuerleitung
- 14: Steuerleitung
- 15: Stromleitung

- s: Abstand des Bolzens von der Struktur
- I: Stromstärke
- t: Zeit

## Patentansprüche

1. Verfahren zum mehrstufigen Lichtbogen-Bolzenschweißen, mit dem ein Bolzen (3), der an seinem Anschweißende einen Flansch (5) aufweist, an eine metallische Struktur (1) herangeführt und angeschweißt wird, wobei zunächst in mindestens zwei Reinigungsstufen mittels eines zwischen dem Bolzen (3) und der Struktur (1) erzeugten Lichtbogens die Oberfläche (7) der Struktur (1) im Aufschmelzbereich (2) gereinigt und erst danach die metallische Verbindung zwischen dem Bolzen (3) und der Struktur (1) durch ein übliches Lichtbogen-Bolzenschweißen vorgenommen wird, wobei die Reinigung der Struktur-Oberfläche (7) in zwei getrennten nacheinander ablaufenden Reinigungsstufen durchgeführt wird, **dadurch gekennzeichnet, daß** die Steuerung des gesamten mehrstufigen Lichtbogen-Schweißverfahrens durch Bewegen des Bolzens (3) in Richtung auf die Struktur (1) und davon weg sowie durch Beginn und Dauer der elektrischen Verbindung des Bolzens (3) mit der Schweißstromquelle (11) erfolgt, wobei die erste Reinigungsstufe folgendermaßen abläuft:
a) der Bolzen (3) wird an die Struktur (1) herangeführt, bis er die Struktur (1) in einem Aufschmelzbereich (2) berührt,
b) der Bolzen (3) ist spätestens beim Berühren der Struktur (1) mit der Schweißstromquelle (11) elektrisch verbunden und wird auf einen solchen Abstand von der Struktur-Oberfläche (7) wegbewegt, daß der entstandene Lichtbogen eine Reinigung der Struktur-Oberfläche (7) auf einer kleinen Fläche bewirkt, die einem Teil der Flansch-Querschnittsfläche entspricht,
c) die Verbindung zur Schweißstromquelle (11) wird unterbrochen, und der Bolzen (3) bleibt in seiner von der Struktur-Oberfläche (7) beabstandeten Stellung bis nach dem Erlöschen des Lichtbogens stehen.

2. Verfahren nach Anspruch 1, **dadurch gekennzeichnet, daß** in der ersten Reinigungsstufe mit einer Stromstärke von etwa 100 A gearbeitet wird und die Dauer der ersten Reinigungsstufe etwa 40 ms beträgt.

3. Verfahren nach Anspruch 1 oder 2, **dadurch gekennzeichnet, daß** der Abstand zwischen dem Bolzen (3) und der Struktur-Oberfläche (7) im Aufschmelzbereich (2) während der ersten Reinigungsstufe etwa 1,0 bis 3,0 mm beträgt, insbesondere etwa die gleiche Größenordnung hat wie der Durchmesser des Aufschmelzbereiches (2).

4. Verfahren nach einem der Ansprüche 1 bis 3, **dadurch gekennzeichnet, daß** der Ruhezustand des von der Struktur-Oberfläche (7) beabstandeten Bolzens (3) nach dem Abschalten der Schweißstromquelle (11) mindestens 30 ms dauert.

5. Verfahren nach einem der Ansprüche 1 bis 4, **gekennzeichnet durch** folgenden Ablauf der zweiten Reinigungsstufe:
a) der Bolzen (3) wird aus seiner den Abschluß der ersten Reinigungssstufe bildenden beabstandeten Ruhestellung wieder an die Struktur (1) herangeführt, bis er die Struktur (1) in ihrem Aufschmelzbereich (2) berührt,
b) der Bolzen (3) ist spätestens beim Berühren der Struktur (1) wieder mit der Schweißstromquelle (11) verbunden und wird auf einen Abstand von der Struktur-Oberfläche (7) wegbewegt, der gleich oder größer ist als bei der ersten Reinigungsstufe und dazu führt, daß der entstandene Lichtbogen eine Reinigung der Struktur-Oberfläche (7) auf einer größeren Fläche bewirkt, die die Größe der Flansch Querschnittsfläche übersteigt,
c) der Abstand zwischen dem Bolzen (3) und der Struktur-Oberfläche (7) im Aufschmelzbereich (2) wird bei ununterbrochenem Fortbestehen des Lichtbogens auf einen Wert verringert, der zum Aufschmelzen der Struktur-Oberfläche (7) geeignet ist, und damit übergangslos die letzte Verfahrensstufe der metallischen Verbindung **durch** Lichtbogen-Bolzenschweißen eingeleitet.

6. Verfahren nach Ansprach 5, **dadurch gekennzeichnet, daß** in der zweiten Reinigungsstufe mit einer Stromstärke von 100 mA gearbeitet wird und die Dauer der zweiten Reinigungsstufe 150 ms beträgt.

7. Verfahren nach einem der vorhergehenden Ansprüche, wobei die metallische Struktur (1) aus Aluminium oder einer Aluminium-Legierung besteht.

8. Verfahren nach einem der vorhergehenden Ansprüche, **dadurch gekennzeichnet, daß** der Bolzen (3) aus einem gleichartigen Material wie die Struktur (1) besteht.

9. Verfahren nach Anspruch 8, **dadurch gekennzeichnet, daß** der Bolzen (3) aus Stahl und die Struktur (1) ebenfalls aus Stahl, vorzugsweise einem mit einer Oberflächenbeschichtung versehenen Stahl, besteht.

10. Verfahren nach einem der vorhergehenden Ansprüche, **dadurch gekennzeichnet, daß** drei oder mehr Reinigungsstufen vor dem eigentlichen Anschweißvorgang stattfinden.

11. Verfahren nach einem der vorherigen Ansprüche,
**dadurch gekennzeichnet, daß**
vor der Reinigung zunächst eine Kenngröße gemessen wird, die proportional zum Verschmutzungsgrad der zu verschweißenden Oberflächen ist, mit deren Hilfe die Anzahl der zusätzlichen Reinigungsstufen bestimmt wird.

12. Verfahren nach Anspruch 11,
**dadurch gekennzeichnet, daß**
eine Kontaktspannung zwischen dem Bolzen (3) und der Struktur (1) gemessen wird.

## Claims

1. Method for the multi-stage arc welding of studs in which a stud (3) having a flange (5) at its welding end is guided to a metallic structure (1) and welded on whereby the surface (7) of the structure (1) is initially cleaned in the fusing region (2) in at least two cleaning stages by means of an arc produced between the stud (3) and the structure (1) and only then is the metallic connection between the stud (3) and the structure (1) undertaken by a conventional arc welding of studs, whereby the cleaning of the structure surface (7) is carried out in two separate consecutive cleaning stages, **characterised in that** the control of the whole multi-stage arc welding process occurs by moving the stud (3) in the direction of the structure (1) and away from it and by the start and duration of the electric connection of the stud (3) to the welding power source (11), whereby the first cleaning stage runs as follows:
a) the stud (3) is guided to the structure (1) until it contacts the structure (1) in a fusing region (2),
b) the stud (3) is electrically connected to the welding power source (11) at the latest on contact with the structure (1) and is removed from the structure surface (7) to such a distance that the resultant arc affects a cleaning of the structure surface (7) over a small area corresponding to a part of the cross-sectional area of the flange,
c) the connection to the welding power source (11) is interrupted and the stud (3) remains in its position spaced away from the structure surface (7) until after the extinction of the arc.

2. Method according to claim 1, **characterised in that** a power intensity of about 100 A is used in the first cleaning stage and the duration of the first cleaning stage is approximately 40 ms.

3. Method according to claim 1 or 2, **characterised in that** the spacing between the stud (3) and the structure surface (7) in the fusing region (2) is about 1.0 to 3.0 mm during the first cleaning stage, in particular is approximately of the same size as the diameter of the fusing region (2).

4. Method according to any one of claims 1 to 3, **characterised in that** the idle state of the stud (3) spaced from the structure surface (7) lasts at least 30 ms after the welding power source (11) has been turned off.

5. Method according to one of claims 1 to 4, **characterised by** the following course of the second cleaning stage:
a) the stud (3) is guided once more out of its spaced idle position forming the conclusion of the first cleaning stage onto the structure (1) until it contacts the structure (1) in its fusing region (2),
b) on contacting the structure (1) at the latest, the stud (3) is reconnected to the welding power source (11) and is removed from the structure surface (7) to a spacing which is identical to or greater than in the first cleaning stage and this results in the resultant arc affecting a cleaning of the structure surface (7) over a greater area which exceeds the size of the cross-sectional area of the flange,
c) the spacing between the stud (3) and the structure surface (7) in the fusing region (2) is, on uninterrupted continuation of the arc, reduced to a value appropriate for the fusing of the structure surface (7) and thus the last stage of the process of metallic connection by arc welding of studs is initiated smoothly.

6. Method according to claim 5, **characterised in that** the power intensity used in the second cleaning stage is 100 mA and the duration of the second cleaning stage is 150 ms.

7. Method according to any one of the preceding claims, wherein the metallic structure (1) consists of aluminium or an aluminium alloy.

8. Method according to any one of the preceding claims, **characterised in that** the stud (3) is made out of a similar kind of material to the structure (1).

9. Method according to claim 8 **characterised in that** the stud (3) consists of steel and the structure (1) also consists of steel, preferably a steel with a surface coating.

10. Method according to any one of the preceding claims, **characterised in that** three or more cleaning stages take place before the actual welding process.

11. Method according to any one of the preceding claims, **characterised in that** before the cleaning a characteristic value is initially measured, which is proportionate to the degree of soiling of the surfaces to be welded, and by means of which value the number of additional cleaning stages is determined.

12. Method according to claim 11, **characterised in that** a contact potential between the stud (3) and the structure (1) is measured.

## Revendications

1. Procédé pour le soudage de goujons à l'arc en plusieurs étapes, selon lequel un goujon (3), qui possède une bride (5) sur son extrémité à souder, est rapproché d'une structure métallique (1) et est soudé sur cette dernière, selon lequel tout d'abord on nettoie la surface (7) de la structure (1) dans la zone de fusion (2) en au moins deux étapes de nettoyage, à l'aide d'un arc électrique produit entre le goujon (3) et la structure (1), et ensuite seulement on exécute la liaison métallique entre le goujon (3) et la structure (1) au moyen d'un soudage usuel de goujons à l'arc, le nettoyage de la surface (7) de la structure étant exécuté en deux étapes de nettoyage séparées, qui se déroulent successivement, **caractérisé en ce que** la commande de l'ensemble du procédé de soudage à l'arc en plusieurs étapes s'effectue par déplacement du goujon (3) vers la structure (1) et en s'éloignant de cette dernière ainsi que par démarrage et durée de la liaison électrique du goujon (3) à la source de courant de soudage (11), la première étape de nettoyage se déroulant de la manière suivante:
a) on approche le goujon (3) de la structure (1), jusqu'à ce qu'il touche la structure (1) dans une zone de fusion (2),
b) au plus tard lorsque le goujon (3) touche la structure (1) celui-ci est relié électriquement à la source de courant de soudage (11), et est écarté à une distance telle de la surface (7) de la structure que l'arc électrique, qui apparaît, provoque un nettoyage de la surface (7) de la structure sur une faible surface qui correspond à une partie de la surface en coupe transversale de la bride,
c) on interrompt la liaison avec la source de courant de soudage (11), et le goujon (3) reste dans sa position écartée de la surface (7) de la structure jusqu'après l'extinction de l'arc.

2. Procédé selon la revendication 1, **caractérisé en ce que** lors de la première étape de nettoyage on travaille avec une intensité de courant d'environ 100 A, et que la durée de la première étape de nettoyage est égale à environ 40 ms.

3. Procédé selon la revendication 1 ou 2, **caractérisé en ce que** la distance entre le goujon (3) et la surface (7) de la structure dans la zone de fusion (2) est comprise entre environ 1,0 et 3,0 mm pendant la première étape de nettoyage, et notamment possède approximativement le même ordre de grandeur que le diamètre de la zone de fusion (2) .

4. Procédé selon l'une des revendications 1 à 3, **caractérisé en ce que** l'état de repos du goujon (3), qui est écarté de la surface (7) de la structure dure au moins 30 ms après le débranchement de la source de courant de soudage (11).

5. Procédé selon l'une des revendications 1 à 4, **caractérisé par** le déroulement indiqué ci-après de la seconde étape de nettoyage:
a) on rapproche à nouveau le goujon (3), depuis sa position de repos écartée définissant la fin de la première étape de nettoyage, de la structure (1) jusqu'à ce qu'il touche la structure (1) dans sa zone de fusion (2),
b) au plus tard lorsqu'il touche la structure (1), le goujon (3) est à nouveau relié à la source de courant de soudage (11) et est écarté à une distance de la surface (7) de la structure, qui est identique ou plus grande que lors de la première étape de nettoyage et conduit au fait que l'arc, qui apparaît, provoque un nettoyage de la surface (7) de la structure sur une surface d'une taille plus importante, qui dépasse la taille de la surface en coupe transversale de la bride,
c) on réduit la distance entre le goujon (3) et la surface (7) de la structure dans la zone de fusion (2) lors du maintien ininterrompu de l'arc, à une valeur qui convient pour réaliser la fusion de la surface (7) de la structure, et par conséquent la dernière étape du procédé de la liaison métallique au moyen du soudage de goujon à l'arc, est déclenchée sans transition.

6. Procédé selon la revendication 5, **caractérisé en ce que** lors de la seconde étape de nettoyage on travaille avec une intensité du courant de 100 mA et la durée de la seconde étape de nettoyage est égale à 150 ms.

7. Procédé selon l'une des revendications précédentes, selon lequel la structure métallique (1) est formée d'aluminium ou d'un alliage d'aluminium.

8. Procédé selon l'une des revendications précédentes, **caractérisé en ce que** le goujon (3) est réalisé en un matériau identique à celui de la structure (1).

9. Procédé selon la revendication 8, **caractérisé en ce que** le goujon (3) est réalisé en acier et la structure (1) est également réalisée en acier, de préférence un acier pourvu d'un revêtement de surface.

10. Procédé selon l'une des revendications précédentes, **caractérisé en ce que** trois ou plusieurs étapes de nettoyage sont mises en oeuvre avant le procédé de liaison par soudage proprement dit.

11. Procédé selon l'une des revendications précédentes, **caractérisé en ce qu'**avant le nettoyage on mesure tout d'abord une grandeur caractéristique, qui est proportionnelle au degré de salissement des surfaces à souder et à l'aide de laquelle le nombre des étapes de nettoyage supplémentaires est déterminé.

12. Procédé selon la revendication 11, **caractérisé en ce qu'**on mesure une tension de contact entre le goujon (3) et la structure.
